# FASCICULE DE BREVET EUROPEEN

(11) **EP 1 516 412 B1**
(45) Date de publication et mention de la délivrance du brevet: **12.09.2018**
(21) Numéro de dépôt: 03760777.7
(22) Date de dépôt: 24.06.2003
(51) Int. Cl.: H02K 15/06

(54) **DISPOSITIF DE PREHENSION ET DE TRANSFERT D'UNE COURONNE DE CONDUCTEURS ELECTRIQUES DESTINEE A LA REALISATION D'UN BOBINAGE, ET SYSTEME DE REALISATION D'UN BOBINAGE UTILISANT UN TEL DISPOSITIF**
VORRICHTUNG ZUM GREIFEN UND UMSETZEN VON LEITERBÜNDELN ZUR WICKLUNGHERSTELLUNG, UND VERFAHREN ZUR HERSTELLUNG EINER WICKLUNG MIT SOLCHER VORRICHTUNG
DEVICE FOR GRIPPING AND TRANSFERRING A RING OF ELECTRICAL CONDUCTORS WHICH IS USED TO PRODUCE A WINDING AND A WINDING-PRODUCTION SYSTEM EMPLOYING ONE SUCH DEVICE

(30) Priorité: 25.06.2002 FR 0207824
(43) Date de publication de la demande: 23.03.2005
(73) Titulaire: VALEO EQUIPEMENTS ELECTRIQUES MOTEUR, 94017 Créteil Cedex (FR)
(72) Inventeur: EVEN, Denis, F-75012 Paris (FR)
(86) Numéro de dépôt international: PCT/FR2003/001929
(87) Numéro de publication internationale: WO 2004/001931

(56) Documents cités:
- WO-A-92/06527
- GB-A- 1 514 609
- GB-A- 2 074 055
- US-A- 2 476 745
- US-A- 5 522 125

## Description

### Domaine technique de l'invention

L'invention concerne un dispositif de préhension et de transfert d'une couronne de conducteurs électriques en forme d'épingles, destinée à la réalisation d'un bobinage notamment en épingles tel qu'un bobinage pour le stator d'une machine électrique tournante, le dispositif de préhension étant adapté pour saisir la couronne dans un premier dispositif notamment de formation de la couronne et pour transférer celle-ci dans un second dispositif notamment d'insertion de la couronne dans l'organe porteur du bobinage à réaliser.

L'invention concerne aussi un système de réalisation d'un bobinage sur un organe porteur, notamment d'un stator à bobinage en épingles d'une machine électrique tournante, comprenant un organe porteur annulaire pourvu dans sa face cylindrique radialement interne d'encoches axiales et un bobinage formé par une pluralité de conducteurs électriques, chacun en forme d'une épingle présentant deux branches reliées par une tête, montés en série et dont les portions droites intermédiaires sont placées dans deux encoches différentes angulairement décalées l'une de l'autre d'un angle prédéterminé tandis que les parties de tête globalement en forme d'un U et les extrémités des branches sont vrillées en conséquence pour obtenir d'un côté axial de l'organe porteur un chignon formé par les têtes des épingles et de l'autre côté un chignon formé par les extrémités libres réunies des épingles, ce système étant du type comprenant un premier dispositif de mise en place des conducteurs en forme d'épingles sous forme d'une couronne de conducteurs et de vrillage des têtes des épingles, un dispositif de préhension de la couronne de conducteurs à têtes d'épingle vrillées et de transfert de cette couronne à un second dispositif dans lequel celle-ci est insérée dans l'organe porteur du bobinage.

### Etat de la technique

Un système de réalisation d'un stator à bobinage en épingle et d'un dispositif de préhension de sortie et d'insertion des épingles, tel que défini plus haut, est connu par la demande de brevet WO 92/06527. Le dispositif de préhension décrit dans ce document constitue un dispositif de transfert autonome séparable desdits premier et deuxième dispositifs. L'inconvénient de ce dispositif réside dans le fait qu'il agit sur les têtes des épingles.

Pour pallier cet inconvénient on peut songer à utiliser une disposition du type de celle décrite dans le document GB-A- 2 047 055 faisant appel à un moyen de commande sous la forme d'un boîtier à l'intérieur duquel est montée une coupelle. Le boîtier est monté mobile par rapport à la coupelle et agit sur des leviers de préhension. La coupelle présente des rainures pour le passage des leviers montés à articulation sur la coupelle entre une position de préhension de la couronne et une position écartée de dégagement de celle-ci.

Les leviers comportent deux bras dont l'un est un bras de commande du pivotement présentant une extrémité sphérique de commande installée dans une rainure circulaire du châssis et l'autre comporte à son extrémité des moyens de préhension de la couronne. Les leviers sont montés ainsi de manière pivotante sur une pièce annulaire formant châssis, à savoir la coupelle, par leur partie intermédiaire située entre les deux bras.

Du fait de la présence de la rainure du boîtier il existe un risque de coincement des leviers.

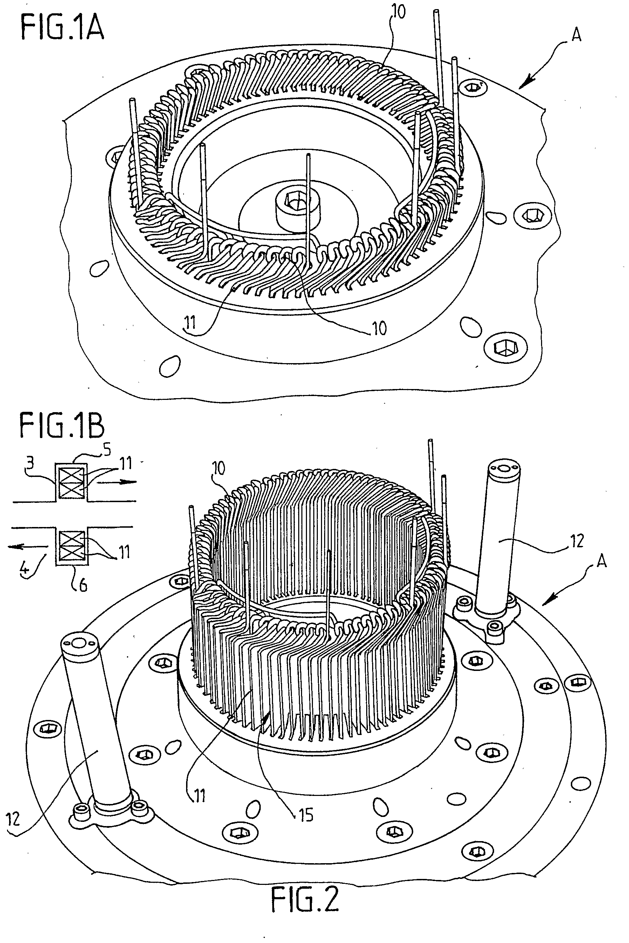

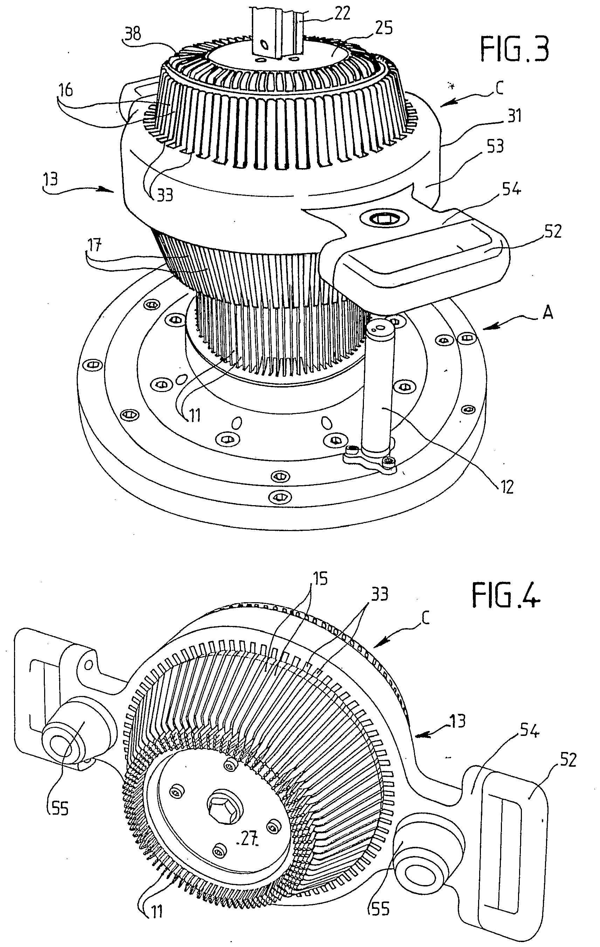

Finalement, le document US 2 476 745 A divulgue un dispositif de préhension et de transfert d'une couronne de conducteurs électriques en forme d'épingles (12) destinées à la réalisation d'un bobinage notamment en épingles tel qu'un bobinage pour le stator d'une machine électrique tournante, le dispositif de préhension étant adapté pour saisir la couronne dans un premier dispositif notamment de formation de la couronne et pour transférer celle-ci dans un second dispositif notamment d'insertion de la couronne dans l'organe porteur du bobinage à réaliser, du type comprenant un châssis (30) et une pluralité de leviers de préhension (50) de la couronne, qui sont montés pivotants sur le châssis (30) entre une position (figure 3) de préhension de la couronne et une position écartée (figure 2) de dégagement de celle-ci, et des moyens communs (le manchon d'actionnement 55) de commande du pivotement des leviers (50) et du type dans lequel les leviers (50) sont des leviers à deux bras (50a, 50b) dont l'un (50a) est le bras de commande tandis que l'autre bras (50b) comporte à son extrémité des moyens de préhension (51) de la couronne ; les leviers (50) étant montés pivotant dans le châssis (30) par leur partie intermédiaire (53) située entre les deux bras (50a, 50b). D'ailleurs, les moyens de commande du pivotement des leviers (50) comprennent un organe (55) coaxial au châssis et comportant une surface périphérique (58) inclinée par rapport à l'axe du châssis, qui est axialement déplaçable sous l'effet d'un dispositif de commande (leviers 60) du déplacement de l'organe (55), et les extrémités des bras de commande (50a) des leviers (50) sont maintenus en appui sur la surface périphérique inclinée (58) de façon que le déplacement axial de l'organe (55) provoque le pivotement des leviers.

### Objet de l'invention

La présente invention a pour but de pallier cet inconvénient.

Selon l'invention, les moyens de commande comprennent un organe en forme d'un cône coaxial au châssis et comportant une surface périphérique extérieure inclinée par rapport à l'axe du châssis, qui est axialement déplaçable dans le châssis sous l'effet d'un dispositif de commande du déplacement du cône de commande et en ce que les extrémités des bras de commande des leviers sont maintenues en appui sur la surface périphérique extérieure inclinée de façon que le déplacement axial du cône provoque le pivotement des leviers.

Grâce au cône selon l'invention on simplifie les moyens de commande et on réduit les risques de coincement des leviers. En outre les leviers sont simplifiés car les bras de commande ont une extrémité en contact local avec le cône de commande de réalisation simple et économique.

De plus, d'une part, le déplacement des leviers est plus précis grâce au cône, dont la pente dépend des applications, et d'autre part, l'extrémité de préhension des leviers est simplifiée du fait que le cône est coaxial au châssis.

En effet les leviers ont une plus grande longueur car ils sont montés pivotant par leur partie intermédiaire située entre les deux bras dans un plan radial ; la couronne étant maintenue par les leviers dans une position coaxiale au châssis.

Dans une forme de réalisation la partie intermédiaire est constituée par la partie médiane des leviers.

Selon une caractéristique, pour un bon pivotement des leviers, la partie intermédiaire des leviers est montée à l'intérieure d'une cavité globalement de forme torique appartenant au châssis. Cette cavité est délimitée par des pièces appartenant au châssis. Les pièces présentent pour chaque levier une fente pour le passage des bras des leviers. Ces pièces forment une partie globalement torique intérieurement creuse et présentent une face interne au moins partiellement courbée selon un arc de cercle de façon à permettre la rotation des parties intermédiaires des leviers présentant à cet effet des tourillons.

Bien entendu les pièces présentent des fentes pour le passage des bras des leviers.

Selon une autre caractéristique de l'invention, pour un déplacement fiable de tous les leviers, les extrémités des bras de commande des leviers sont maintenues en appui contre la surface inclinée du cône de commande du pivotement des leviers par un joint torique élastique disposé dans une gorge annulaire coaxiale au châssis, formé par des encoches dans la face extérieure des extrémités des bras de commande.

Selon une autre caractéristique de l'invention, pour faciliter la prise des épingles, au moins certaines des extrémités des bras de préhension des leviers comportent des goupilles latérales assurant un serrage des branches droites des épingles de la couronne de conducteurs du bobinage à former contre une surface d'appui du châssis lorsque les leviers occupent leur position de serrage.

Selon une autre caractéristique de l'invention, les extrémités des bras de préhension des leviers sont configurées pour pénétrer entre les branches droites des épingles de la couronne, qui sont adjacentes dans la direction périphérique de cette dernière, lorsque les leviers pivotent dans leur position de préhension.

Selon une autre caractéristique de l'invention, le dispositif de préhension et de transfert comporte des poignées de manutention.

Selon une autre caractéristique de l'invention, de manière simple et économique, le dispositif de commande du déplacement axial du cône est formé par un vérin interposé entre le cône et le châssis.

Selon une autre caractéristique de l'invention, des moyens de positionnement prédéterminés sur les premier et second dispositifs précités sont avantageusement réalisés sous forme d'éléments tubulaires ou de colonnettes destinées à coopérer avec des colonnettes ou des éléments tubulaires complémentaires prévus sur lesdits dispositifs.

Le système de l'invention est caractérisé en ce que le dispositif de préhension et de transfert est réalisé sous forme d'un dispositif autonome susceptible d'être positionné sur lesdits premier et deuxième dispositifs dans une position prédéterminée et séparable de ces dispositifs, le dispositif de préhension et de transfert et lesdits premier et second dispositifs comprenant des moyens de repère pour un positionnement prédéterminé défini du dispositif de préhension et de transfert par rapport aux premier et deuxième dispositifs.

Selon une caractéristique du système selon l'invention, le premier et deuxième dispositifs précités constituent des postes de travail indépendants et séparés.

Selon une autre caractéristique de l'invention, le système comprend un dispositif de préhension et de transfert tel que défini ci-dessus.

Selon une autre caractéristique de l'invention les moyens de repère de positionnement précités sont formés par au moins deux éléments tubulaires ou colonnettes qui sont prévus respectivement sur le dispositif de préhension et de transfert, d'une part, et sur les postes de travail d'autre part, et en ce que les éléments tubulaires sont destinés à être emmanchés sur les colonnettes lorsque le dispositif de transfert est placé sur les postes de travail.

### Brève description des figures

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- la figure 1A est une vue en perspective d'un poste de vrillage des têtes d'épingle d'une couronne de conducteur en forme d'épingles devant former un bobinage de stator selon l'invention, et montre les têtes d'épingle après le vrillage;
- la figure 1B est une vue schématique, avec arrachement, illustrant la disposition des épingles dans le poste de vrillage des têtes d'épingle avant l'opération de vrillage ;
- la figure 2 est une vue en perspective du poste de vrillage selon la figure 1, mais montre la couronne dans sa position de préhension et de sortie de ce poste ;
- la figure 3 est une vue en perspective du dispositif de transfert selon l'invention, dans sa position d'engagement sur la couronne selon la figure 2 ;
- la figure 4 est une vue en perspective du dispositif de transfert après la préhension et l'enlèvement de la couronne du poste de vrillage ;
- la figure 5 est une vue schématique illustrant l'opération de préhension de la couronne par le dispositif de transfert ;
- la figure 6 est une vue en perspective du poste d'insertion de la couronne à têtes d'épingle vrillées, selon l'invention, dans un corps de stator ;
- la figure 7 est une vue en perspective du dispositif de transfert selon l'invention et du poste d'insertion selon la figure 6, au cours de l'insertion de la couronne à têtes d'épingle vrillées ;
- la figure 8 est une vue en coupe selon la ligne VIII-VIII de la figure 7 ;
- la figure 9 est une vue en coupe similaire à la figure 8, mais montre le dispositif de transfert après le relâchement de la couronne insérée dans le corps de stator ;
- la figure 10 est une vue en perspective illustrant la couronne, sans les sorties des phases de' la figure 2, après son insertion dans un corps de stator, conformément après la figure 9 et après le départ du dispositif de transfert.

### Description de modes de réalisation préférentiels de l'invention.

L'invention sera décrite dans son application à un système de réalisation d'un stator d'une machine électrique tournante notamment un alternateur pour véhicule automobile, qui est pourvu d'un organe annulaire porteur sous la forme d'un corps de stator pour le montage d'un bobinage formé par une pluralité de conducteurs en forme d'épingles, montés en série. Les épingles comportent deux branches reliées par une tête courbée et ont ainsi globalement une forme de U. Les épingles traversent à la faveur de leurs branches le corps du stator et forment aux deux extrémités du corps du stator des réseaux appelés chignons. L'un des chignons est formé par les têtes des épingles et l'autre par les extrémités libres réunies, par exemple par soudage, des branches des épingles reliées entre elles selon une configuration déterminée. Le corps de forme annulaire du stator est constitué de manière conventionnelle d'un paquet de tôles doté d'encoches d'orientation axiale pour le montage des branches des épingles.

Le système selon l'invention comporte un premier poste A dans lequel les têtes des épingles présentant la composition d'ensemble d'une couronne annulaire sont vrillées, de façon connue en soi, et un second poste B dans lequel la couronne après le premier vrillage des têtes d'épingle est insérée dans le corps de stator et les extrémités libres des branches des épingles sont vrillées, ainsi qu'un dispositif C de transfert et de préhension de la couronne d'épingle après le premier vrillage des têtes d'épingle du premier poste A au deuxième poste B. Pour plus de précisions on se reportera par exemple au document WO 92/06527 décrivant le bobinage du stator et son montage dans le corps du stator d'un alternateur de véhicule automobile. Le dispositif de préhension selon l'invention est applicable au bobinage de ce document.

Comme le montre les figures 1A et 1B, les conducteurs en forme d'épingle, désignés par la référence générale 1 sont disposés dans un dispositif à deux outils coaxiaux tournants 3, 4 qui comportent dans leurs faces en regard des encoches respectivement 5, 6 destinées chacune à recevoir une des deux branches droites 8 de deux conducteurs en forme d'épingle 1. Après l'insertion des conducteurs dans les encoches du corps du stator, les deux outils sont amenés à tourner dans des directions inverses, de la manière illustrée par des flèches, d'un angle prédéterminé pour obtenir le vrillage souhaité des têtes 10 des épingles globalement en forme de U..

Avantageusement, le poste A est pourvu d'une plaque supérieure (non représentée), mais connue en soi par exemple par le document WO 92/06527 précité, avec des saillies pour la formation d'entretoises pour les extrémités supérieures des épingles. Le poste A comporte en outre, également de façon connue en soi, des poussoirs non représentés qui sont destinés à repousser axialement les épingles pour dégager une partie des branches droites indiquées par la référence 11 suffisante afin que le bobinage puisse être saisi par le dispositif de transfert C.

Conformément à une caractéristique de l'invention, la partie fixe de ce poste comporte des colonnettes 12 de positionnement sur le poste A du dispositif de transfert B qui sera décrit ci-après.

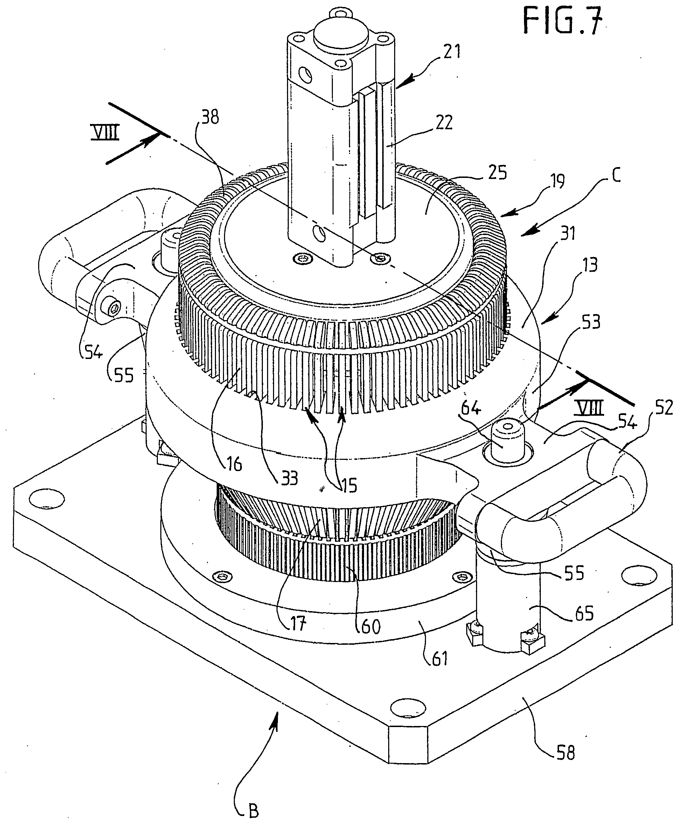

En se référant notamment aux figure 7 à 9, le dispositif de transfert et de préhension C comporte essentiellement un châssis 13 fixe de support d'une pluralité de lames articulées 15, chacune en forme d'un levier à deux bras 16, 17, un cône 19 de commande du pivotement des leviers 15, qui est monté axialement mobile dans le châssis 13 et un dispositif de commande du déplacement du cône 19, réalisé sous la forme d'un vérin 21, ici hydraulique, dont le cylindre 22 est monté sur une plaque supérieure de coiffe 25 du cône 19 tandis que la tige de vérin 26 est fixé sur une console 27 à la base du châssis 13. En variante le vérin est du type électrique. Les leviers 15 sont montés pivotants sur le châssis par leur partie intermédiaire 18 située entre les deux bras. Ici la partie 18 est une partie médiane ; les bras 16,17 étants sensiblement égaux. En variante l'un des bras est plus long que l'autre. Dans les figures la partie médiane 18 est de forme sensiblement circulaire en section en sorte qu'elle constitue un tourillon cylindrique et est montée pivotante dans le châssis 13. Les leviers 15 sont pivotants par leur partie intermédiaire dans un plan radial ; la couronne, de forme annulaire étant maintenue par les leviers dans une position coaxiale au châssis.

Ce châssis comporte un manchon central 28 à section transversale circulaire dont l'extrémité inférieure est solidaire, ici par vissage, de la console 27. A l'autre extrémité est fixée, ici à l'aide de vis, par l'intermédiaire d'une pièce en forme d'une bague 30, une pièce annulaire creuse 31 destinée à loger les parties médianes circulaires 18 des leviers 15. La face interne de la pièce 31 est au moins partiellement courbée en 32 selon un arc de cercle de façon à permettre la rotation de ces parties médianes 18. La bague 30 est prolongée, ici d'un seul tenant, par une partie annulaire creuse 130 présentant une face interne également partiellement courbée en 132 selon un arc de cercle de façon à permettre la rotation de la partie médiane 18 des leviers 15. La face interne de la partie creuse 130 de la bague 30 est décalée axialement et transversalement par rapport à la face interne de la pièce 31. La pièce 31 délimite ainsi avec la partie creuse 130 de la bague 30 une cavité annulaire, ici globalement de forme torique, de logement des parties médianes 18. Il est ainsi formé une partie annulaire 130, 31 globalement en forme de tore présentant une paroi supérieure appartenant à la pièce 31 et une paroi inférieure plus épaisse appartenant à la partie creuse 130 de la bague 30. Les parois supérieure et inférieure sont parallèles entre elles et sont d'orientation transversale par rapport à l'axe axial de symétrie X-X du dispositif de transfert et de préhension C. L'axe X-X est aussi l'axe axial de symétrie du vérin 19 et de l'agencement des leviers 15.

Ici la paroi supérieure de la pièce 31 est raccordée par une paroi en forme d'arc de cercle, présentant intérieurement la face courbée 32, à un anneau 29 cylindrique d'orientation axiale, tandis que la paroi inférieure de la partie 130 est raccordée par une paroi extérieurement chanfreinée à un anneau cylindrique 29 d'orientation axiale de raccordement à la bague 30. L'anneau 29 entoure l'anneau de la partie 130, dont la paroi extérieurement chanfreinée présente intérieurement la face 132 en forme d'arc de cercle. La pièce 31 et la partie 130 sont ainsi montées de manière inversée.

Le tore 31, 130 comporte pour chaque levier 15 une fente 33 dans ses parois supérieure et inférieure pour le passage des bras 16 et 17 des leviers. Chaque fente 33 a une largeur légèrement supérieure à l'épaisseur du levier correspondant et une longueur suffisante pour permettre le pivotement du levier.

Le cône 19 de commande du pivotement des leviers 15 comporte à son extrémité opposée à celle coiffée par la plaque 25 un embout coaxial à section transversale circulaire 36 qui est monté axialement coulissant dans le manchon 28 du châssis 13, sous le fait du vérin de commande 21.

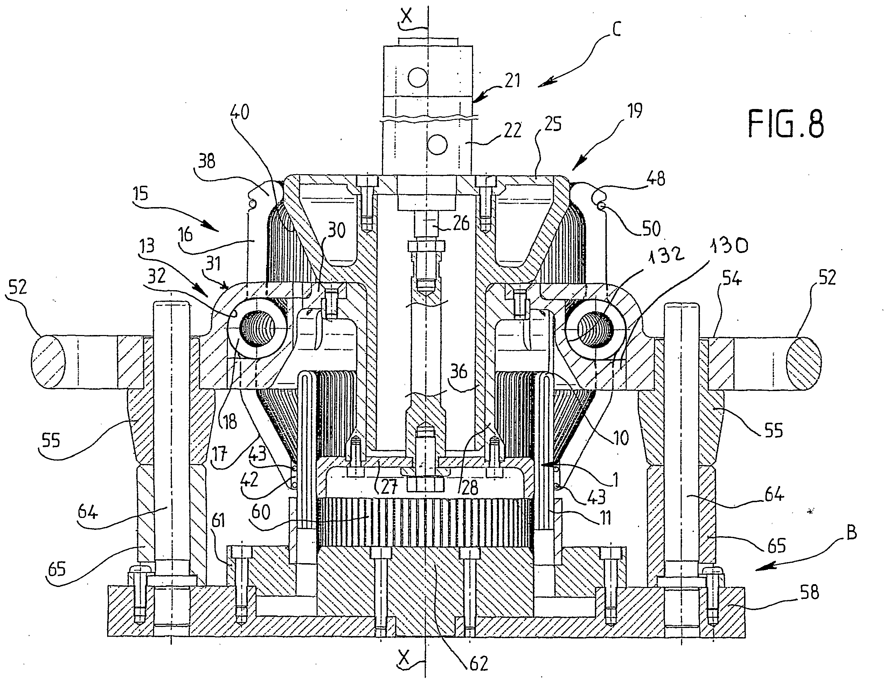

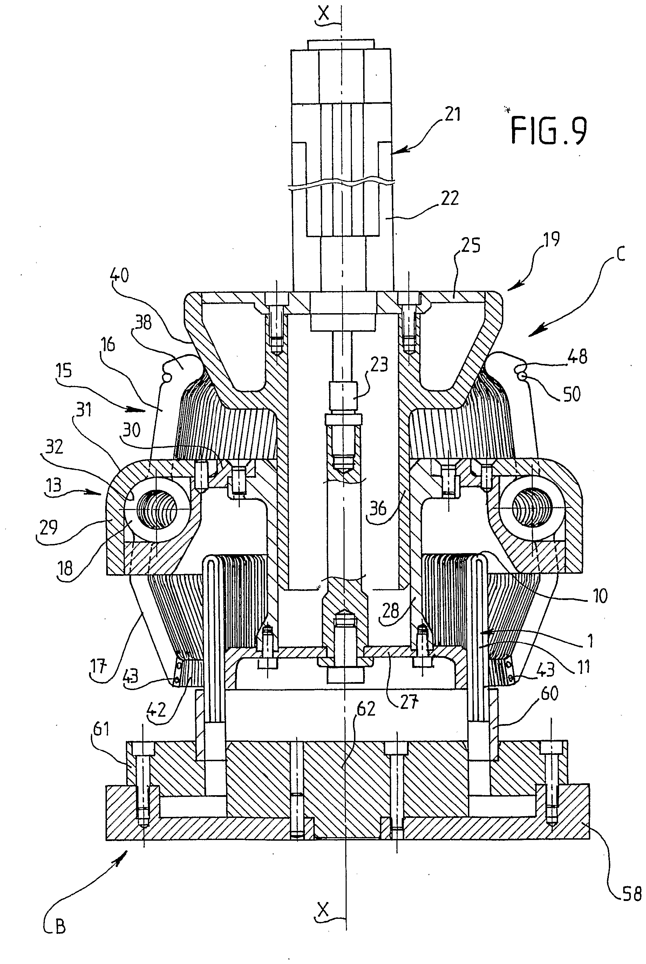

Le dispositif de transfert C comporte un nombre de leviers pivotant 15 qui est égal au nombre des conducteurs en forme d'épingle 1 du bobinage de rotor à réaliser. Comme on le voit notamment sur les figures 8 et 9, les extrémités 38 des bras supérieurs 16 de commande des leviers 15 sont coudées en direction de l'axe X-X du dispositif de transfert et prennent appui par leur face d'extrémité arrondie sur la face conique périphérique 40 du cône de commande 19. Le cône va en se rétrécissant du haut en bas. L'extrémité libre 42 en forme de patte de chaque bras inférieur 17 de préhension d'un levier pivotant 15 est coudée en direction de l'axe X-X. Les extrémités coudées s'étendent sensiblement perpendiculairement à l'axe X-X, présentent une largeur leur permettant de pénétrer entre les branches droites 11 de deux conducteurs en épingle 1 adjacentes.

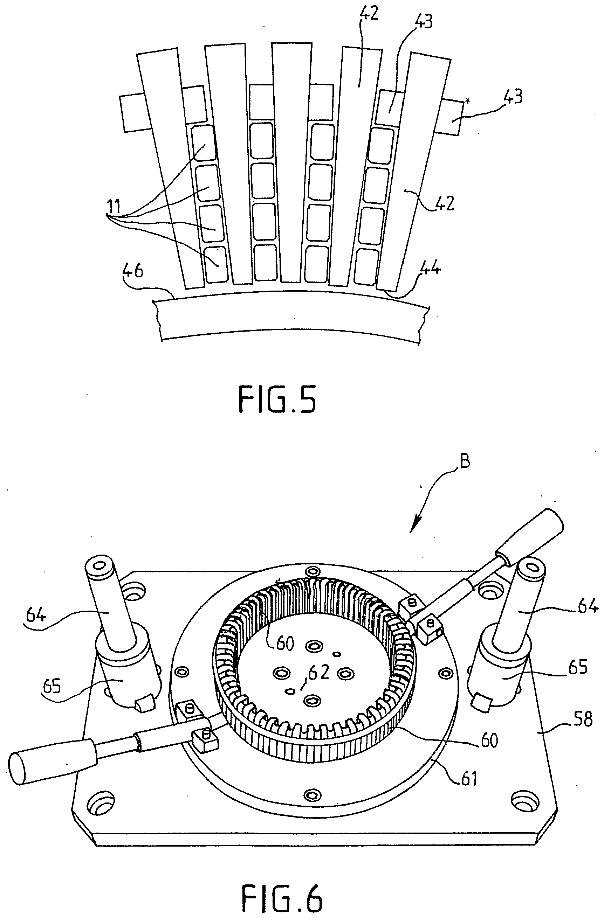

Comme on le voit notamment sur la figure 5, une sur deux des extrémités 42 est configurée en patte de préhension en lui associant de goupilles 43 faisant saillie de part et d'autre, latéralement. Ces goupilles sont situées à une distance du bord d'extrémité libre 44 de la patte pour assurer un effet de préhension par serrage des quatre branches droites 11 radialement alignées du bobinage situées entre deux extrémités 42 adjacentes, entre une goupille 43 et une face d'appui 46 du châssis du dispositif de transfert, qui est formée par la surface périphérique extérieure cylindrique d'orientation axiale de la console 27 réalisée à cette fin sous la forme d'une coupelle renversée. Les goupilles 43 sont situées au niveau de la jonction entre la patte 42 qui les porte et le restant du bras de levier 17.

Comme le voit notamment sur les figures 8 et 9, pour assurer un bon fonctionnement des leviers, les centres des parties centrales circulaires 18 des leviers se trouvent sur un cercle coaxial à l'axe X-X du dispositif, dont le diamètre est supérieur au diamètre extérieur de la couronne formée par les branches droites 11 des épingles 1.

Selon une caractéristique importante de l'invention, chaque levier 15 présente au niveau de son extrémité supérieure 38 d'appui sur la face 40 du cône 19, dans sa face extérieure, une encoche 48 de façon que l'ensemble des encoches 48 forment une gorge annulaire dans laquelle est disposée un joint torique 50 élastiquement déformable qui a pour fonction de maintenir les extrémités d'appui 38 sur la surface conique 40 du cône de commande 19. Par conséquent, lorsque le vérin 21 déplace le cône de commande 19 de sa position haute vers le bas, les leviers 15 pivotent entre une position d'écartement maximale des pattes 42 de l'axe X-X et une position rapprochée de préhension de la couronne du bobinage à transférer du poste A au poste B.

Selon une autre caractéristique importante de l'invention, le dispositif de transfert C comporte, disposées diamétralement opposées, deux poignées de manutention 52 qui sont fixées chacune sur la face périphérique extérieure 53 de l'anneau 29 de la pièce 31 du châssis 13 par une partie intermédiaire 54 qui porte une pièce tubulaire 55 dont l'axe est parallèle à l'axe X-X du dispositif. Les deux pièces tubulaires 55 sont disposées de façon à pouvoir s'engager sur les colonnettes 13 du poste de vrillage A et assurent ainsi, en coopération avec ces colonnettes un positionnement précisément défini du dispositif de transfert sur la couronne du bobinage tel que réalisé dans le poste A.

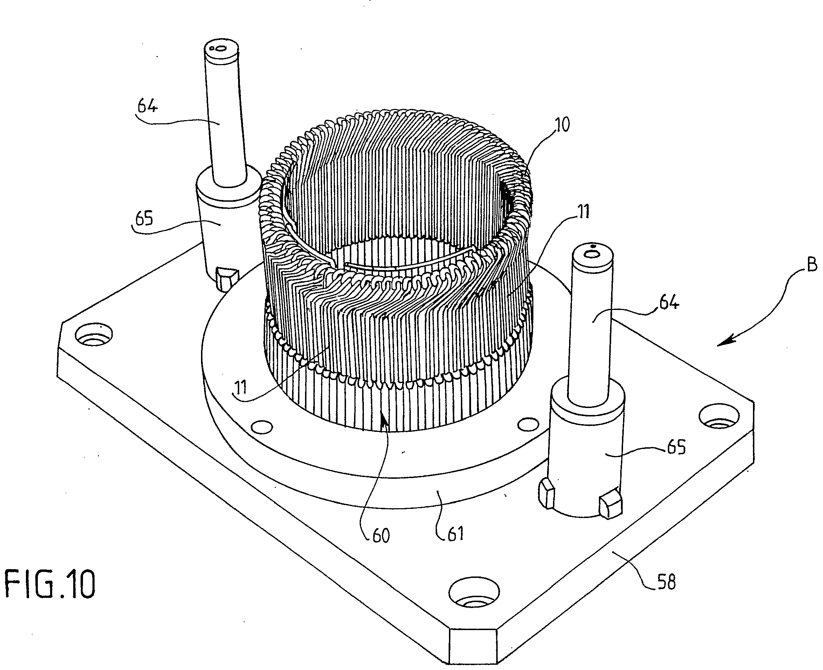

Le poste B comporte, comme cela est montré sur les figures 6 à 10, un socle 58 de support d'un corps annulaire de stator tel que désigné par la référence 60 sur les figures 8 et 9. Pour assurer un positionnement centré du corps de stator sur le socle, celui-ci porte une rondelle de centrage extérieure 61 et une pièce de centrage intérieure 62. Le corps du stator est alors disposé entre la rondelle et la pièce centrale 62, comme cela est montré sur les figures 8 et 9. La rondelle 61 et la pièce 62 sont ici fixées par vissage sur le socle 58.

Le socle 58 du poste B porte sur sa face supérieure deux colonnettes 64 de positionnement du dispositif de transfert C, qui sont disposées de façon à s'engager chacune dans une pièce 55 de centrage de ce dispositif. Les colonnettes sont entourées d'éléments tubulaires échangeables 65 d'appui des faces frontales des pièces 55 du centrage 55. Tout cela est rendu possible du fait du cône 40 et de la pièce annulaire 31.

Il est encore à noter que le poste B est également équipé de quatre outils concentriques non représentés de vrillage des branches droites 11 de la couronne de bobinage après l'insertion dans le corps du stator dans les gorges de celui-ci et l'enfoncement des épingles. Cette seconde opération de vrillage et les outils utilisés à cette fin étant connus en soi, les outils ne seront pas décrits plus en détail.

On décrira ci-après le fonctionnement du système de réalisation d'un stator, qui vient d'être décrit.

Dans le premier poste de vrillage A, après l'insertion des conducteurs 1 en forme d'épingles dans les encoches 5, 6 des deux outils tournants 3 et 4, qui forment alors une couronne d'épingles, on amène les outils à tourner en sens inverse pour effectuer le vrillage des têtes des épingles. Puis, par intervention des poussoirs d'éjection, les épingles dont les branches sont toujours droites sont repoussées jusqu'à ne laisser qu'une petite partie engagée dans les outils de vrillage.

Puis on amène le poste de transfert C au poste de vrillage A et le positionne sur ce poste en faisant passer les tubes de centrage 55 sur les colonnettes de positionnement 12 du poste A. Les leviers 15 du dispositif C occupe alors leur positionnement écarté de l'axe X-X, et le cône d'appui 19 se trouve dans sa position haute.

Après ce positionnement correct du dispositif C sur le poste A, on actionne le vérin 21 de façon que celui-ci déplace le cône d'appui 19 vers le bas, ce qui fait pivoter les leviers 15 dans leur position de préhension de la couronne de bobinage encore retenue dans le poste A. Ce pivotement force les pattes 42 des bras de levier 17 de pénétrer entre les branches droites des conducteurs en épingle jusqu'à ce que l'une sur deux des rangés de quatre branches soit enserrée entre les goupilles 43 et la face d'appui en regard 46 de la console 27 du châssis du poste de transfert (figure 5). Puis on déplace le poste de transfert C verticalement vers le haut le long des colonnettes de positionnement 12 et enlève ainsi la couronne de bobinage du poste A, puisque les branches des épingles restent prisonnières dans le dispositif de transfert.

Puis on déplace le dispositif de transfert C avec la couronne de bobinage emprisonnée, comme cela est montré par la figure 4, au deuxième poste B et on positionne ce dispositif sur le poste en enfilant les tubes de centrage 55 sur les colonnettes de positionnement 64 de ce dernier. Lors de ce mouvement d'enfilement, qui assure la position relative correcte du dispositif de transfert C et ainsi de la couronne de bobinage par rapport au stator 60 qui a été mis en place auparavant dans le poste B, les extrémités des branches droites des épingles pénètrent dans les encoches du corps de stator, comme le montre la figure 8. Puis on amène les pattes de préhension 42 des leviers 15 à s'écarter, ce qui libère la couronne retenue par les extrémités des épingles dans le corps du stator par déplacement du cône d'appui 19 vers le haut, par l'intermédiaire du vérin 21. Dans cette position d'ouverture des leviers, le dispositif de transfert C peut être enlevé du poste B.

Ensuite, après avoir enfoncé les épingles 1 dans le corps du stator 60, on vrille les extrémités des branches 11 des épingles à l'aide des quatre outils concentriques qui font partie, de façon connue en soi, du poste B.

Il est à noter que grâce aux colonnettes de positionnement 12 et 64 des postes A et B et des tubes de centrage 55 enfilables sur ces colonnettes, du dispositif de transfert C, les postes A et B peuvent être indépendants et séparés l'un de l'autre et la couronne d'épingles, après son premier vrillage dans le poste A peut être transporté par le dispositif de transfert C au poste B, sans risque de la perte des repères de positionnement correcte de la couronne par rapport au corps du stator.

L'invention est notamment utilisable pour la réalisation de bobinages triphasés ou à deux systèmes triphasés décalés ou à un nombre quelconque de systèmes triphasés décalés. Les bobinages en épingles peuvent être du type à 2, 4, 6 ou encore plus conducteurs par encoche. Les bobinages sont particulièrement avantageusement destinés à des alternateurs pour véhicules automobiles, en particulier à 6, 7, 8 ou 9 paires de pôles tels ceux décrits dans la demande FR-A- 2 819 117. C'est pour cette raison que l'on voit dans les figures 1A et 2 les sorties des phases du bobinage et les barres de neutre. Grâce à l'invention la présence de telles barres de neutre d'orientation circonférentielle et de sorties d'orientation axiale est possible ; ces sorties s'étendant en saillie axiale par rapport aux têtes. Pour plus de précisions on se reportera à ce document. Bien entendu l'invention est applicable à un démarreur de véhicule automobile ; le bobinage étant dans ce cas celui d'un rotor constituant l'organe porteur.

## Revendications

1. Dispositif de préhension et de transfert d'une couronne de conducteurs électriques en forme d'épingles destinées à la réalisation d'un bobinage notamment en épingles tel qu'un bobinage pour le stator d'une machine électrique tournante, le dispositif de préhension étant adapté pour saisir la couronne dans un premier dispositif notamment de formation de la couronne et pour transférer celle-ci dans un second dispositif notamment d'insertion de la couronne dans l'organe porteur du bobinage à réaliser, du type comprenant un châssis (13) et une pluralité de leviers de préhension (15) de la couronne, qui sont montés pivotants sur le châssis entre une position de préhension de la couronne et une position écartée de dégagement de celle-ci, et des moyens communs de commande du pivotement des leviers (15) et du type dans lequel les leviers (15) sont des leviers à deux bras (16, 17) dont l'un (16) est le bras de commande tandis que l'autre bras (17) comporte à son extrémité des moyens de préhension (42, 43) de la couronne ; les leviers (15) étant montés pivotant dans le châssis (13) par leur partie intermédiaire (18) située entre les deux bras (16, 17), **caractérisé en ce que** les moyens de commande du pivotement des leviers (15) comprennent un organe (19) en forme d'un cône coaxial au châssis et comportant une surface périphérique extérieure (40) inclinée par rapport à l'axe (X-X) du châssis, qui est axialement déplaçable dans le châssis (13) sous l'effet d'un dispositif de commande (21) du déplacement du cône (19) et **en ce que** les extrémités (38) des bras de commande (16) des leviers (15) sont maintenus en appui sur la surface périphérique extérieure inclinée (40) de façon que le déplacement axial du cône provoque le pivotement des leviers.

2. Dispositif selon la revendication 1, **caractérisé en ce que** les extrémités (38) des bras de commande (16) des leviers (16) sont maintenues en appui contre la surface inclinée (40) du cône (19) de commande du pivotement des leviers par un joint torique (50) élastiquement déformable disposé dans une gorge annulaire coaxiale au châssis, formé par des encoches (48) dont la face extérieure des extrémités (38) des bras de commande (16).

3. Dispositif selon la revendication 1 ou 2, **caractérisé en ce que** les leviers (15) sont montés pivotant par leur partie intermédiaire (18) située entre les deux bras (16,17) dans un plan radial et **en ce que** la couronne est maintenue par les leviers (15) dans une position coaxiale au châssis (13)

4. Dispositif selon l'une quelconque des revendications précédentes, **caractérisé en ce que** la partie intermédiaire (18) est constituée par la partie médiane des leviers (15).

5. Dispositif selon l'une quelconque des revendications précédentes, **caractérisé en ce que** la partie intermédiaire (18) des leviers (15) est montée à l'intérieure d'une cavité globalement de forme torique délimitée par des pièces annulaires (31, 130) appartenant au châssis et **en ce que** lesdites pièces présentent pour chaque levier (15) une fente (33) pour le passage des bras (156,17) des leviers (15) .

6. Dispositif selon la revendication 5, **caractérisé en ce que** lesdites pièces forment une partie globalement torique intérieurement creuse et présentent une face interne (32,132) au moins partiellement courbée selon un arc de cercle de façon à permettre la rotation des parties intermédiaires (18) des leviers (15) présentant à cet effet des tourillons.

7. Dispositif selon l'une des revendications précédentes, **caractérisé en ce qu'**au moins certaines des extrémités (42) des bras de préhension (17) des leviers (15) comportent des goupilles latérales (43) assurant un serrage des branches droites des épingles de la couronne de conducteurs (1) du bobinage à former contre une surface d'appui (46) du châssis (13) lorsque les leviers (15) occupent leur position de serrage.

8. Dispositif selon la revendication 7, **caractérisé en ce que** les extrémités (42) des bras de préhension (17) des leviers (15) sont configurés pour pénétrer entre les branches droites (11) des épingles de la couronne, qui sont adjacentes dans la direction périphérique de cette dernière, lorsque les leviers (15) pivotent dans leur position de préhension.

9. Dispositif selon l'une des revendications 1 à 8, **caractérisé en ce qu'**il comporte des poignées (52) de manutention.

10. Dispositif selon l'une des revendications précédentes, **caractérisé en ce que** les moyens de commande du déplacement axial du cône (19) sont formés par un vérin (21) interposé entre le cône (19) et le châssis (13).

11. Dispositif selon l'une des revendications 1 à 10, **caractérisé en ce qu'**il comprend des moyens de positionnement prédéterminés sur les premier (A) et second (B) dispositifs précités, qui sont avantageusement réalisés sous forme d'éléments tubulaires (55) ou de colonnettes destinées à coopérer avec des colonnettes (12, 64) ou des éléments tubulaires complémentaires prévus sur lesdits dispositifs (A B) .

## Patentansprüche

1. Vorrichtung zum Greifen und Umsetzen eines Kranzes von haarnadelförmigen elektrischen Leitern, die zur Herstellung einer Wicklung, insbesondere einer Haarnadelwicklung, wie etwa einer Wicklung für den Stator einer rotierenden elektrischen Maschine, bestimmt sind, wobei die Vorrichtung zum Greifen dafür ausgelegt ist, den Kranz in einer ersten Vorrichtung, insbesondere zur Ausbildung des Kranzes, zu ergreifen und denselben in eine zweite Vorrichtung, insbesondere zum Einsetzen des Kranzes in das Trägerorgan der herzustellenden Wicklung, umzusetzen, des Typs, welcher ein Gestell (13) und eine Vielzahl von Hebeln zum Greifen (15) des Kranzes, welche an dem Gestell schwenkbar zwischen einer Position des Greifens des Kranzes und einer entfernten Position der Freigabe desselben gelagert sind, und gemeinsame Mittel zur Steuerung der Schwenkung der Hebel (15) umfasst, und des Typs, bei welchem die Hebel (15) Hebel mit zwei Armen (16, 17) sind, von denen der eine (16) der Steuerungsarm ist, während der andere Arm (17) an seinem End Mittel zum Greifen (42, 43) des Kranzes trägt; wobei die Hebel (15) an ihrem Zwischenabschnitt (18), der sich zwischen den zwei Armen (16, 17) befindet, schwenkbar in dem Gestell (13) gelagert sind, **dadurch gekennzeichnet, dass** die Mittel zur Steuerung der Schwenkung der Hebel (15) ein Organ (19) in Form eines Kegels, der mit dem Gestell koaxial ist und eine bezüglich der Achse (X-X) des Gestells geneigte äußere Umfangsfläche (40) aufweist, umfassen, welches in dem Gestell (13) unter der Einwirkung einer Vorrichtung zur Steuerung (21) der Verschiebung des Kegels (19) axial verschiebbar ist, und dadurch, dass die Enden (38) der Steuerungsarme (16) der Hebel (15) in Anlage an der geneigten äußeren Umfangsfläche (40) gehalten werden, derart, dass die axiale Verschiebung des Kegels die Schwenkung der Hebel hervorruft.

2. Vorrichtung nach Anspruch 1, **dadurch gekennzeichnet, dass** die Enden (38) der Steuerungsarme (16) der Hebel (16) in Anlage an der geneigten Fläche (40) des Kegels (19) zur Steuerung der Schwenkung der Hebel durch einen elastisch verformbaren O-Ring (50) gehalten werden, der in einer mit dem Gestell koaxialen Ringnut angeordnet ist, die von Einschnitten (48) deren Außenseite der Enden (38) der Steuerungsarme (16) gebildet wird.

3. Vorrichtung nach Anspruch 1 oder 2, **dadurch gekennzeichnet, dass** die Hebel (15) an ihrem Zwischenabschnitt (18), der sich zwischen den zwei Armen (16, 17) befindet, in einer radialen Ebene schwenkbar gelagert sind, und dadurch, dass der Kranz von den Hebeln (15) in einer mit dem Gestell (13) koaxialen Position gehalten wird.

4. Vorrichtung nach einem der vorhergehenden Ansprüche, **dadurch gekennzeichnet, dass** der Zwischenabschnitt (18) aus dem mittleren Abschnitt der Hebel (15) besteht.

5. Vorrichtung nach einem der vorhergehenden Ansprüche, **dadurch gekennzeichnet, dass** der Zwischenabschnitt (18) der Hebel (15) im Inneren eines im Wesentlichen torusförmigen Hohlraums angebracht ist, der von zum Gestell gehörenden ringförmigen Teilen (31, 130) begrenzt wird, und dadurch, dass diese Teile für jeden Hebel (15) einen Schlitz (33) für den Durchgang der Arme (156, 17) der Hebel (15) aufweisen.

6. Vorrichtung nach Anspruch 5, **dadurch gekennzeichnet, dass** die Teile einen innen hohlen, im Wesentlichen torusförmigen Abschnitt bilden und eine Innenfläche (32, 132) aufweisen, die wenigstens teilweise kreisbogenförmig gekrümmt ist, um die Rotation der Zwischenabschnitte (18) der Hebel (15) zu ermöglichen, die zu diesem Zweck Drehzapfen aufweisen.

7. Vorrichtung nach einem der vorhergehenden Ansprüche, **dadurch gekennzeichnet, dass** wenigstens einige der Enden (42) der Greifarme (17) der Hebel (15) seitliche Stifte (43) umfassen, die ein Andrücken der geraden Schenkel der Haarnadeln des Kranzes von Leitern (1) der zu bildenden Wicklung an eine Anlagefläche (46) des Gestells (13) sicherstellen, wenn die Hebel (15) ihre Spannposition einnehmen.

8. Vorrichtung nach Anspruch 7, **dadurch gekennzeichnet, dass** die Enden (42) der Greifarme (17) der Hebel (15) so gestaltet sind, dass sie zwischen die geraden Schenkel (11) der Haarnadeln des Kranzes, welche in der Umfangsrichtung dieses Letzteren benachbart sind, eingreifen, wenn die Hebel (15) in ihre Greifposition schwenken.

9. Vorrichtung nach einem der Ansprüche 1 bis 8, **dadurch gekennzeichnet, dass** sie Griffe (52) zur Handhabung umfasst.

10. Vorrichtung nach einem der vorhergehenden Ansprüche, **dadurch gekennzeichnet, dass** die Mittel zur Steuerung der axialen Verschiebung des Kegels (19) von einem Hubzylinder (21) gebildet werden, der zwischen dem Kegel (19) und dem Gestell (13) angeordnet ist.

11. Vorrichtung nach einem der Ansprüche 1 bis 10, **dadurch gekennzeichnet, dass** sie vorbestimmte Mittel zur Positionierung an der ersten (A) und zweiten (B) oben genannten Vorrichtung aufweist, welche vorteilhafterweise in Form von rohrförmigen Elementen (55) oder von Stäben ausgeführt sind, die dazu bestimmt sind, mit Stäben (12, 64) oder komplementären rohrförmigen Elementen zusammenzuwirken, die an den Vorrichtungen (A, B) vorgesehen sind.

## Claims

1. Device for gripping and transferring a ring of hairpin-shaped electrical conductors which are intended for creating a winding, notably a hairpin winding, such as a winding for the stator of a rotary electrical machine, the gripping device being designed to grasp the ring in a first device, notably a ring-forming device, and to transfer it to a second device, notably a device for inserting the ring into the member that bears the winding that is to be produced, of the type comprising a chassis (13) and a plurality of ring-gripping levers (15), which are pivot mounted on the chassis so as to pivot between a ring-gripping position and a parted ring-release position, and collective means for controlling the pivoting of the levers (15) and of the type in which the levers (15) are levers having two arms (16, 17) of which one (16) is the control arm while the other arm (17) comprises at its end means (42, 43) for gripping the ring; the levers (15) being pivot mounted in the chassis (13) via their intermediate part (18) situated between the two arms (16, 17), **characterized in that** the means controlling the pivoting of the levers (15) comprise a member (19) in the shape of a cone coaxial with the chassis and comprising an exterior peripheral surface (40) that is inclined with respect to the axis (X-X) of the chassis, which can be moved axially in the chassis (13) under the effect of a control device (21) controlling the movement of the cone (19) and **in that** the ends (38) of the control arms (16) of the levers (15) are kept pressing against the inclined exterior peripheral surface (40) so that axial movement of the cone causes the levers to pivot.

2. Device according to Claim 1, **characterized in that** the ends (38) of the control arms (16) of the levers (16) are kept pressing against the inclined surface (40) of the cone (19) that controls the pivoting of the levers by an elastically deformable 0 ring (50) housed in an annular groove coaxial with the chassis, formed by notches (48) of which the exterior face of the ends (38) of the control arms (16).

3. Device according to Claim 1 or 2, **characterized in that** the levers (15) are pivot mounted by their intermediate part (18) which is situated between the two arms (16, 17) in a radial plane and **in that** the ring is held by the levers (15) in a position coaxial with the chassis (13).

4. Device according to any one of the preceding claims, **characterized in that** the intermediate part (18) is made up of the middle part of the levers (15).

5. Device according to any one of the preceding claims, **characterized in that** the intermediate part (18) of the levers (15) is mounted inside a roughly torus-shaped cavity delimited by annular components (31, 130) belonging to the chassis and **in that** the said components offer, for each lever (15), a slot (33) for the passage of the arms (16, 17) of the levers (15).

6. Device according to Claim 5, **characterized in that** said components form an internally hollow roughly torus-shaped part and have an internal face (32, 132) that is at least partially curved into an arc of a circle so as to allow the rotation of the intermediate parts (18) of the levers (15) which, for this purpose, have journals.

7. Device according to one of the preceding claims, **characterized in that** at least some of the ends (42) of the gripping arms (17) of the levers (15) comprise lateral pins (43) for clamping the straight legs of the hairpins of the ring of conductors (1) of the winding that is to be formed against a bearing surface (46) of the chassis (13) when the levers (15) are occupying their clamping positon.

8. Device according to Claim 7, **characterized in that** the ends (42) of the gripping arms (17) of the levers (15) are configured to fit between the straight legs (11) of the hairpins of the ring, which are adjacent in the peripheral direction thereof, when the levers (15) pivot into their gripping position.

9. Device according to one of Claims 1 to 8, **characterized in that** it comprises handles (52) for handling it.

10. Device according to one of the preceding claims, **characterized in that** the means for controlling the axial movement of the cone (19) are formed by an actuating cylinder (21) interposed between the cone (19) and the chassis (13).

11. Device according to one of Claims 1 to 10, **characterized in that** it comprises predetermined positioning means on the first (A) and second (B) aforementioned devices, which means are advantageously produced the form of tubular elements (55) or guide pins intended to collaborate with complementary guide pins (12, 64) or complementary tubular elements provided on said devices (A, B).
